Europäisches Patentamt

European Patent Office

Office européen des brevets

(11) Publication number: **0 234 802**
**A2**

(12) **EUROPEAN PATENT APPLICATION**

(21) Application number: 87301158.9

(51) Int. Cl.³: **B 60 S 1/48**

(22) Date of filing: 10.02.87

(30) Priority: 11.02.86 GB 8603367

(43) Date of publication of application:
02.09.87 Bulletin 87/36

(84) Designated Contracting States:
AT BE CH DE ES FR GB GR IT LI LU NL SE

(71) Applicant: Lucas Electrical Electronics & Systems
Limited
Well Street
Birmingham B19 2XF(GB)

(72) Inventor: Wilcox, Kenneth John
22 Brynawelon Road
Cyncoed Cardiff Wales(GB)

(74) Representative: Shaw, Laurence
George House George Road
Edgbaston Birmingham B15 1PG(GB)

(54) Fluid pump.

(57) A fluid pump adapted to pump fluid from a single reservoir to either of two user devices respectively in dependence upon the direction of rotation of a rotor (5) mounted in a housing (1) of the pump, includes pressure differential responsive valve means (21) operative to determine to which user device fluid is pumped, and pressure modifying means (30) operative to require a higher differential pressure for operation to pump fluid to one of the user devices than to the other.

FIG.2.

LUCAS ELECTRICAL ELECTRONICS 1

AND SYSTEMS LIMITED                              AGENTS REF:2329

FLUID PUMP

This invention relates to a fluid pump and particularly to a fluid pump adapted to pump fluid from a single reservoir to either of two user devices selectively.

Such pumps are used in automobiles where it is necessary to pump cleaning fluid, e.g. water, from a storage container to say either a windscreen washer nozzle or a rear window washer nozzle, or to either a windscreen washer nozzle and headlamp washer nozzles.

Examples of such fluid pumps are described in GB-A-2139701 and EP-A-0128579.

These known pumps comprise a housing having an inlet for connection to a fluid reservoir and two outlets for connection to two fluid user devices respectively; a rotor mounted in the housing and arranged to be driven by a reversible motor, and valve means operative to direct fluid from the reservoir to either one of the two outlets in dependence upon the direction of rotation of the rotor.

In the pump disclosed in GB-A-2139701 the valve means comprises a member mounted for rotation with the rotor between two set positions in each of which it closes a respective one of the outlets while leaving the other outlet open, the member being mounted on a common shaft with the rotor by means of a slipping clutch arrangement which permits the rotor to rotate when the member is stopped in either of its set positions.

In the pump disclosed in EP-A-0128579 the valve means comprises an individual non-return valve constituted by a spring-biased ball in each of the outlets, the valves being operated as required by differential pressures set up between the two outlets in dependence upon the direction of rotation of the rotor.

Both these known pumps suffer from the disadvantages that they are relatively complex in construction, and thus difficult and expensive to manufacture and in that they can be inefficient in use.

In EP-A-0128446 there is disclosed a fluid pump of the type set out above in which the two outlets respectively communicate with two outlet passages which pass through a common cavity, the valve means comprising a flexible diaphragm mounted across the common cavity to divide the common cavity into two parts each forming part of a respective one of the outlet passages, the diaphragm being urged by higher pressure fluid in either of the two parts of the common cavity relative to the other part, to close the outlet passage including the other part.

Such a fluid pump has the advantage of simplicity of construction with the valve means having no relatively movable parts save for the flexible diaphragm, this giving the further advantages of cheapness and ease of manufacture and reliability in operation.

However, this known pump has the disadvantage that the valve means is responsive to the same higher pressure in either of the two parts of the cavity relative to the other part to close the outlet passage including the other part, such operation not always being desirable. For example, in an automobile a rear window washer nozzle may require higher water pressure supply than a windscreen washer nozzle / because it is further from the pump and at a higher level.

According to this invention there is provided a fluid pump adapted to pump fluid from a single reservoir to either of
two user devices respectively, comprising a housing having
an inlet for connection to a fluid reservoir and two outlets
for connections to the two user devices respectively, the
two outlets respectively communicating with two outlet
passages which pass through a common cavity; a rotor
mounted in the housing and arranged to be driven by a
reversible motor; and valve means comprising a flexible
diaphragm mounted across the common cavity to divide the
common cavity into two parts each forming part of a
respective one of the outlet passages, the diaphragm being
urged by higher pressure fluid in either one of the two
parts of the common cavity relative to the other part to
close the outlet passage including the other part, the
higher pressure being produced in the fluid in either one or
the other of the two parts of the common cavity in
dependence upon the direction of rotation of the rotor,
characterised by pressure modifying means operative in one
of the outlet passages to require a higher fluid pressure to
close that outlet passage than is required to close the
other outlet passage.

Preferably the common cavity is provided by a body having
two inlet stubs connected to the two outlets of the housing
respectively, and two outlet stubs for connection to the two

0234802

user devices respectively.  It is preferred that the body is
formed of two parts secured together to define the common
cavity, with the diaphragm being sandwiched between the two
body parts.

The pressure modifying means can be a spring serving to urge
the diaphragm to close said other of the outlet passages
when the pump is not in use.  The spring can be located in
the common cavity.

This invention will now be described by way of example with
reference to the drawing, in which:-

>      Figure 1 is a diagrammatic perspective view of a
>                  fluid pump according to the invention; and
>      Figure 2 is a horizontal sectional view through the
>                  pump of Figure 1.

The pump to be described is for use in an automobile to
effect the selective supply of cleaning water from a
reservoir thereof to either a windscreen washer nozzle or a
rear window washer nozzle.

The pump comprises a housing 1 having an inlet pipe 2 for
connection by tubing to a water reservoir (not shown) and two outlet pipes 3 and 4 by way of which water from the
reservoir is to be supplied to the two user devices
respectively.  The housing 1 contains a three vane rotor 5
driven by a reversible electric motor 100 on which the
housing 1 is mounted.  The motor 1 is controlled by driver-
operated switch means (not shown).  The rotor 5 in cooperation with the wall of the housing 1 divides the space
in the housing 1 into three chambers 6, 7 and 8, and the
outlet pipes 3 and 4 communicate with individual ones 7 and
8, of these chambers.

Connected to the two outlet pipes 2  and 3 is a valve means
9 comprising a body 10 formed from two mirror image moulded
plastic material parts 11 and 12 secured together as by an
adhesive or ultrasonic welding.  Each body part 11 or 12
provides a stub 13 or 14 for connection to a respective one
of the outlet pipes 3 and 4 and a further stub 15 or 16
constituting an outlet from the complete pump.  The stubs 13
and 15 or 14 and 16 of each body part 11 or 12 define an
outlet passage 17 or 18 through that body part 11 or 12, the
passage 17 or 18 extending from the respective outlet pipe 3
or 4 of the housing 1 and a respective outlet of the pump.

The outlet passages 17 and 18 pass through a common cavity
20 formed between the two body parts 11 and 12, which

**0234802**

cavity 20 is divided into two parts, each forming part of a respective outlet passage 17 or 18, by a flexible diaphragm 21 of, for example, natural or synthetic rubber sandwiched between the two body parts 11 and 12. The diaphragm 21 is formed with an enlarged peripheral portion 22 which is received in an annular groove 23 formed by the two body parts 11 and 12 to restrain inward movement of the periphery of the diaphragm 21 when it is flexed.

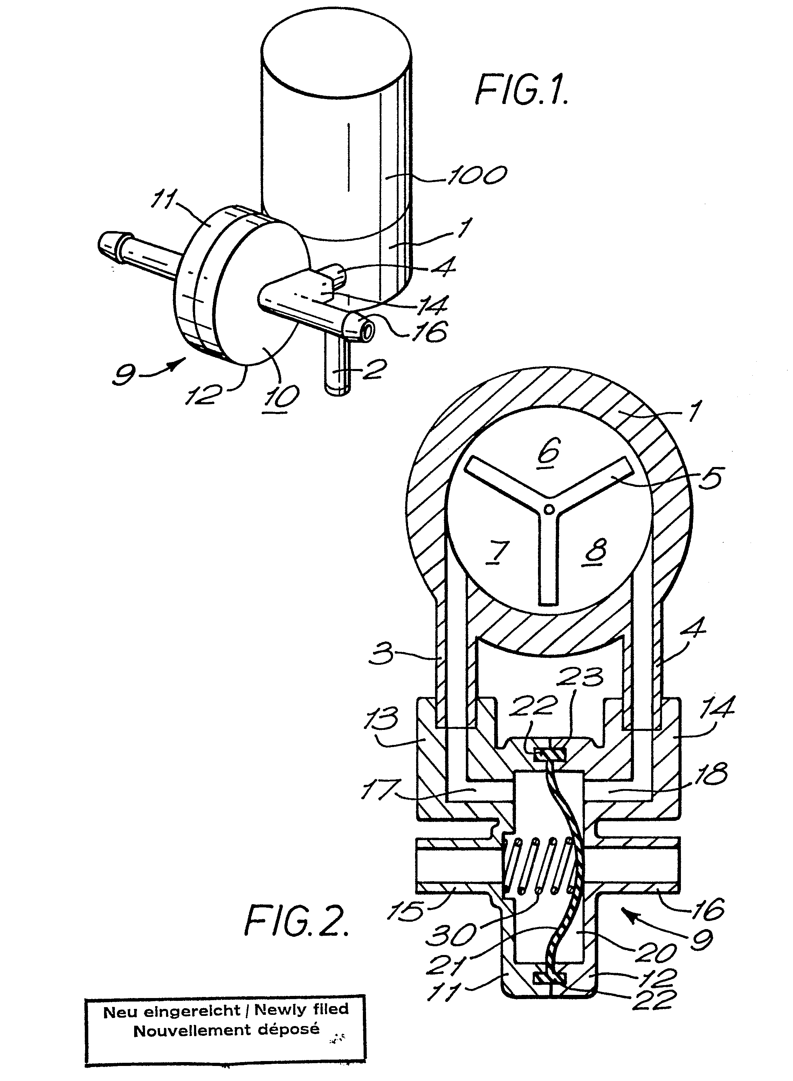

As shown in Figure 2, the outlet stubs 15 and 16 are axially aligned with the common axis passing substantially through the centre of the diaphragm 21, the arrangement being such that flexure of the diaphragm 21 towards either of the outlet stubs 15 and 16 results in the diaphragm 21 closing off the passage 17 or 18 passing through that outlet stub 15 or 16 while leaving the other outlet passage open.

As described above a rear window washer nozzle requires a higher pressure supply than a windscreen washer nozzle, and thus the cavity 20 contains a spring 30 acting to bias the diaphragm 21 towards the outlet stub 16, to which the rear window washer nozzle requiring a higher pressure supply is connected. Thus, the differential pressure set up in the cavity 20 must overcome the bias force provided by the spring 30 before the diaphragm 21 is urged away from the

**0234802**

outlet stub 16 to open the outlet passage 18 for water to be supplied to the higher-pressure-requiring rear window washer nozzle.

When the rotor 5 is rotated clockwise as seen in Figure 2 by the motor 100 the pressure in chamber 8 and thus in outlet passage 18 becomes higher than that in chamber 7 and thus in passage 17. This higher pressure in outlet passage 18 relative to outlet passage 17 when sufficient to overcome the bias force of spring 30 acts in the cavity 20 to urge the diaphragm 21 towards the outlet stub 15 thereby to close the outlet passage 17. Water from the reservoir is then pumped by the pump from the reservoir connected to the inlet pipe 2 through the outlet pipe 4 and the outlet passage 18 to the rear window washer nozzle connected to outlet stub 16. If the motor 100 is operated to rotate the rotor 5 in the anticlockwise direction as seen in Figure 2, then the pressure in chamber 7 will be higher than that in chamber 8, the outlet passage 18 will remain closed by the bias force of the spring 30, and water from the reservoir will be supplied by way of outlet pipe 3 and outlet passage 17 to the windscreen washer nozzle connected to outlet stub 15.

As a modification of the pump described above the spring 30 can be omitted and replaced by a pressure sensitive valve arrangement (not shown) which can be located remote from the cavity of the pump.

It is usual to include a non-return valve in the circuit of the vehicle washer system to prevent return of fluid under gravity from a user device, typically the washer at the rear of the vehicle, towards the reservoir.  It is an advantage of this invention that the spring biased diaphragm serves to prevent the return of such fluid under gravity.  As a result an independent non-return valve is omitted from the circuit so saving the cost.

CLAIMS

1.      A fluid pump adapted to pump fluid from a single reservoir to either of two user devices respectively, comprising a housing (1) having an inlet (2) for connection to a fluid reservoir and two outlets (3,4) for connection to the two user devices respectively, the two outlets (3,4) respectively communicating with two outlet passages (17,18) which pass through a common cavity (20); a rotor (5) mounted in the housing (1) and arranged to be driven by a reversible motor (100); and valve means (21) comprising a flexible diaphragm (21) mounted across the common cavity (20) to divide the common cavity (20) into two parts each forming part of a respective one of the outlet passages (17,18), the diaphragm (21) being urged by higher pressure fluid in either one of the two parts of the common cavity (20) relative to the other part to close the outlet passage including the other part, the higher pressure being produced in the fluid in either one or the other of the two parts of the common cavity (20) in dependence upon the direction of rotation of the rotor (5), characterised by pressure modifying means (30) operative in one (17) of the outlet

LUCAS ELECTRICAL ELECTRONICS 2

AND SYSTEMS LIMITED                    AGENTS REF: 2329

passages (17,18) to require a higher fluid pressure to close that outlet passage (17) than is required to close the other outlet passage (18).

2.      A fluid pump as claimed in Claim 1, characterised in that the common cavity (20) is provided by a body (10) having two inlet stubs (13,14) connected to the two outlets (3,4) of the housing (1) respectively, and two outlet stubs (15,16) for connection to the two user devices respectively.

3.      A fluid pump as claimed in Claim 2, characterised in that the body (10) is formed of two parts (11,12) secured together to define the common cavity (20) with the diaphragm (21) being sandwiched between the two body parts (11,12).

4.      A fluid pump as claimed in any preceding Claim, characterised in that the pressure modifying means comprises a spring (30) serving to urge the diaphragm (21) to close said other (18) of the outlet passages when the pump is not in use.

5.      A fluid pump as claimed in Claim 4, characterised in that the spring (30) is located in the common cavity (20).

6.      A fluid pump as claimed in any of Claims 1 to 3, characterised in that the pressure modifying means comprises a pressure sensitive valve arrangement.

7.      A washer circuit adapted to dispense fluid, the circuit comprising a reservoir, a fluid pump device and two user devices characterised in that the fluid pump is according to any preceding claim and in that the spring (30) biased diaphragm (31) thereof is arranged to prevent return of fluid under gravity from a user device (16) towards the

reservoir.

0234802

1/1

FIG.1.

FIG.2.